# EUROPEAN PATENT APPLICATION

(11) **EP 4 769 357 A1**
(43) Date of publication of application: **01.07.2026**
(21) Application number: 25222403.5
(22) Date of filing: 10.12.2025
(51) Int. Cl.: G07F 19/00

(54) **COMPUTER VISION FEATURE-BASED IMAGE ALIGNMENT**

(30) Priority: 31.12.2024 US 202419006443
(71) Applicant: Cardtronics USA, Inc., Atlanta, GA 30308-1007 (US)
(72) Inventor: FYFE, Conor Michael, Dundee DD7 3NX (US); MCDADE, Mark, Dundee DD2 3SZ (GB)
(74) Representative: Secerna LLP

(57) **Abstract**

A method and automated teller machine (ATM) are disclosed. The method comprises capturing, using a camera, an image inside a card reader of an automated teller machine (ATM); generating a set of key points of the image; aligning key points of the set of key points of the image to corresponding key points in a baseline image to create an aligned image; comparing the aligned image to the baseline image to determine whether a skimmer is present; and in response to determining that the skimmer is present inside the card reader of the ATM, outputting an alert.

## Description

### BACKGROUND

Skimmers are covert devices placed inside a card reader, for example in an automated teller machine (ATM) to steal information from a magnetic stripe or chip on a card (e.g., credit card, debit card, etc.). Skimmers are typically designed to mimic the original card slot, making them difficult to detect without close inspection. Captured data may be stored locally and obtained when a thief retrieves the skimmer or transmitted wirelessly. The data is then used to apply fraudulent charges, withdraw money, or otherwise engage in fraud with the data.

### SUMMARY

In various examples, methods and systems for detecting whether a skimmer is present in a card reader of an ATM are presented.

According to an example, a technique may include capturing an image of a portion of the card reader, generating a set of key points of the image, and aligning key points of the set of key points of the image to corresponding key points in a baseline image to create an aligned image. The technique may include comparing the aligned image to the baseline image to determine whether a skimmer is present, and outputting a result of the determination.

According to a first aspect of the present invention there is provided a method comprising:
capturing, using a camera, an image inside a card reader of an automated teller machine (ATM);
generating a set of key points of the image;
aligning key points of the set of key points of the image to corresponding key points in a baseline image to create an aligned image;
comparing the aligned image to the baseline image to determine whether a skimmer is present; and
in response to determining that the skimmer is present inside the card reader of the ATM, outputting an alert.

Aptly, wherein comparing the aligned image to the baseline image includes comparing a region of interest in the aligned image to a corresponding region of interest in the baseline image.

Aptly, wherein determining that the skimmer is present includes determining that the region of interest differs from the corresponding region of interest by greater than a threshold.

Aptly, determining that the skimmer is present includes determining that pixel values in the region of interest differ from corresponding pixel values in the corresponding region of interest.

Aptly, the method further comprising before generating the set of key points of the image, comparing the image to the baseline image to determine whether alignment is needed.

Aptly, wherein determining that alignment is needed includes identifying that the camera has moved.

Aptly, wherein determining that alignment is needed includes determining that the comparison of the image to the baseline image triggers the alert.

Aptly, wherein the baseline image is captured by the camera during a process of initial installation of the camera in the ATM.

Aptly, wherein capturing the image includes capturing the image in response to detecting removal of a card from the card reader.

According to a second aspect of the present invention there is provided an automated teller machine (ATM) comprising:
a card reader;
a camera configured to capture an image of a portion of the card reader;
processing circuitry; and
memory including instructions, which when executed by the processing circuitry, cause the processing circuitry to perform operations including:
   generating a set of key points of the image;
   aligning key points of the set of key points of the image to corresponding key points in a baseline image to create an aligned image; comparing the aligned image to the baseline image to determine whether a skimmer is present; and
outputting a result of the determination.

Aptly, wherein the result of the determination is that no skimmer is present, and wherein outputting the result includes saving an indication of the result in a log.

Aptly, wherein outputting the result includes outputting an alert in response to determining that the skimmer is present inside the card reader of the ATM.

Aptly, wherein comparing the aligned image to the baseline image includes comparing a region of interest in the aligned image to a corresponding region of interest in the baseline image.

Aptly, wherein determining whether the skimmer is present includes determining whether the region of interest differs from the corresponding region of interest by greater than a threshold.

Aptly, wherein determining whether the skimmer is present includes determining whether pixel values in the region of interest differ from corresponding pixel values in the corresponding region of interest.

Aptly, the ATM further comprising before generating the set of key points of the image, comparing the image to the baseline image to determine whether alignment is needed.

Aptly, wherein determining that alignment is needed includes identifying that the camera has moved.

Aptly, wherein determining that alignment is needed includes determining that the comparison of the image to the baseline image triggers an alert.

Aptly, wherein the baseline image is captured by the camera during a process of initial installation of the camera in the ATM.

Aptly, wherein capturing the image includes capturing the image in response to detecting removal of a card from the card reader.

### BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various examples discussed in the present document.
FIG. 1 illustrates a block diagram showing components of an automated teller machine (ATM) in accordance with some examples.
FIG. 2 illustrates a diagram showing key points on a photo in accordance with some examples.
FIG. 3 illustrates a set of comparison images between a baseline image and a captured image in accordance with some examples.
FIG. 4 illustrates generally a flowchart showing a technique for detecting whether a skimmer is present in a card reader of an ATM in accordance with some examples.
FIG. 5 illustrates generally an example of a block diagram of a machine upon which any one or more of the techniques discussed herein may perform in accordance with some examples.

### DETAILED DESCRIPTION

The systems and techniques described herein provide security for an automated teller machine (ATM), such as to prevent skimmer fraud. A skimmer is a device used to steal card data (e.g., a credit card, a debit card, etc.) by intercepting data from a card when the card is placed near the skimmer. A skimmer may be placed in an ATM, such as near a card reader such that when a card is inserted for legitimate use with the card reader, the skimmer steals the card data. In some examples, skimmers are passive and are placed for later retrieval, while other skimmers actively send back data to fraudsters. In order to prevent skimmers from stealing card data, a camera may be used to capture an image of where a card is inserted to ensure that a skimmer is not present. However, a camera is susceptible to being jostled or moved, for example when the ATM is moved or rattled, and the camera may not capture a precise picture for comparing to a baseline image. The systems and techniques described herein reduce false positive results of a skimmer based on camera image capture.

Hardware movement (e.g., a camera) may be reduced by aligning an image with a computer vision technique. A skimming surveillance solution uses an image thresholding to compare two images to detect whether a skimmer is present. Image thresholding may include comparing pixel values between two images to identify whether any changes occurred between the two images. Movement of camera hardware may cause a false alert since the images may not be aligned correctly. Movement of the camera may be caused due to a card nudging the camera, incorrectly installed hardware, a tolerance issue, a temperature change, a vibration, or the like. Camera movement may be identified and an image may be aligned for comparison using the systems and techniques described herein.

When using image thresholding it is important that images are correctly aligned when performing a comparison because otherwise the images will appear to be different enough to trigger an alert. Misaligned images may result in a false alert, causing frustration for a bank or a customer.

A skimming surveillance solution may capture a reference image before a user transaction and a comparison image after the transaction. The reference image may be captured when a camera is installed, periodically (e.g., daily), before a card is inserted (e.g., based on a prompt at an ATM), or the like. The reference image and the comparison image may be compared using an image threshold. In some examples, a specified region of interest may be used for the image threshold. The comparison may be used to determine whether a skimmer has been inserted into a card reader. When the camera hardware is moved after the reference image has been taken and before the comparison image is captured, misaligned images may occur, causing a false alert.

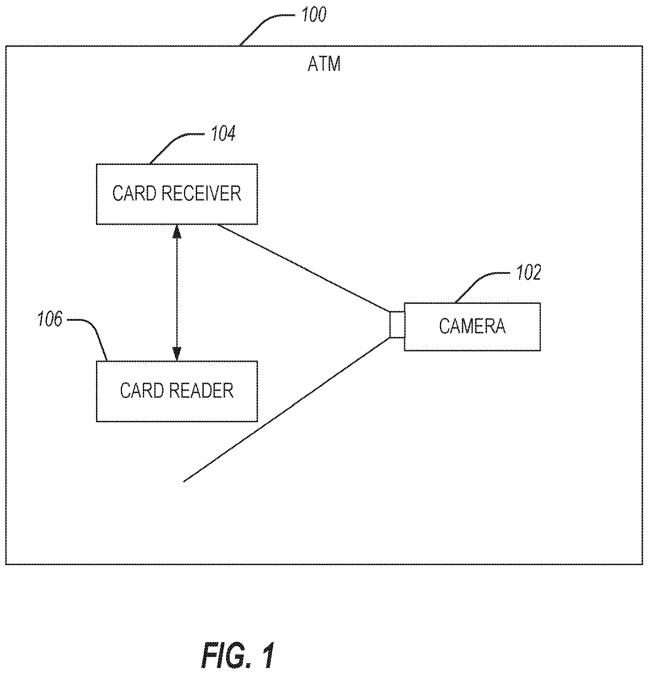

FIG. 1 illustrates a block diagram showing components of an automated teller machine (ATM) 100 in accordance with some examples. The ATM 100 includes a camera 102, a card receiver 104 (e.g., a slot), and a card reader 106. Other components of the ATM 100 are omitted for illustration purposes. The camera 102 may have a field of view that includes the card reader 106. The camera 102 may be configured to capture an image in response to one or more interactions with the ATM 100, such as when a card is inserted into the card receiver 104, when the card reader 106 activates to read the card, when the card is removed from the field of view, when the card is removed from the card receiver 104, in response to determining via the card reader 106 that the card was present and then has been removed, or the like.

The camera 102 may capture an image of the field of view, including the card reader 106 and any object that occupies space between the camera 102 and the card reader (e.g., if a skimmer is present). The camera 102 may capture an image when the camera is installed initially, as a baseline image. The camera 102 may capture an image after a card is removed (e.g., each time a card is inserted and then removed via the card receiver 104). In an example, a fraudster may insert a skimmer with a card through the card receiver 104 (e.g., behind the card). Then when removing the card, the fraudster leaves the skimmer in place near the card reader 106. The camera may captured an image of the card reader 106, and a comparison may be made to the baseline image to determine that the skimmer has been inserted and left in place.

In an example, should a comparison between a baseline image and an image captured by the camera 102 be determined to indicate an alert (e.g., the comparison includes a number of pixels over a threshold that indicate a change, such as within a region of interest), the alert may be a false alert. To determine whether the alert is a false alert, the captured image may be warped to map to the baseline image. After warping the captured image, the warped image may then be compared to the baseline image. When this comparison does not indicate an alert, then the first alert was a false alert. When this second comparison does indicate an alert, the alert is genuine, and further actions may be taken to address the foreign object or potential skimmer.

When an alert occurs, a help desk may be sent an indication that there is an issue with the card reader 106, indicating suspected fraud. Action taken in response to the alert may include removing the ATM 100 from service, disabling the ATM 100, sending an engineer or operator to investigate, alerting a card user of the ATM 100, etc.

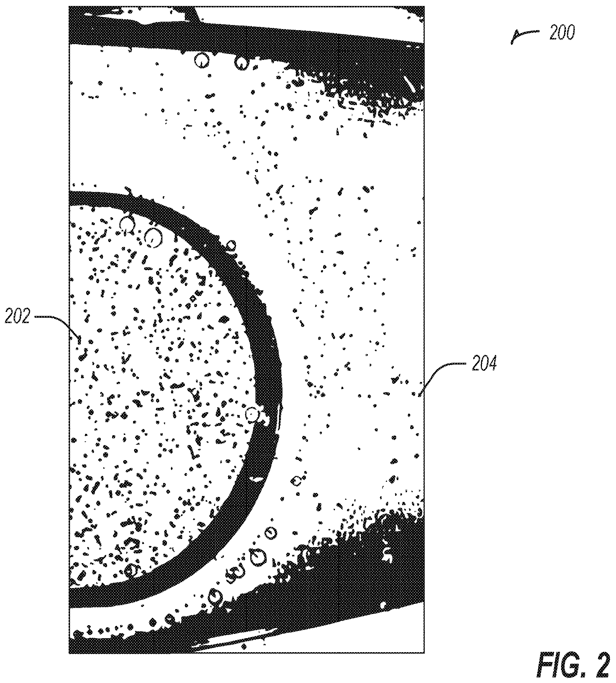

FIG. 2 illustrates a diagram 200 showing key points (e.g., 202 and 204) on a photo in accordance with some examples. The diagram 200 includes an example portion of an image captured by a camera of a card reader and surrounding area. The small markings on the diagram 200 are example key points, which may include hundreds or thousands of key points per image, such as key point 202 and key point 204. The diagram 200 may represent a reference image (e.g., a baseline image) or an image captured for comparison. Both a captured image and a baseline image may have key points identified (e.g., the baseline image may be preprocessed to identify the key points and the captured image may be processed after capture). The captured image may then be manipulated such that the key points of the captured image are altered to match locations of the key points of the baseline image. Using the key point alteration, a temporary aligned image may be generated (e.g., by warping the captured image to align key points in the captured image with key points in the baseline image). The temporary aligned image may be compared to the baseline image to determine whether there is a change from the baseline image (e.g., whether a skimmer is present in the diagram 200).

In an example, an algorithm may be used to generate the key points. For example, distinctive key points may be identified and compared and descriptors may be calculated (e.g., using ORB detector from Open-Source Computer Vision Library). A brute-force matcher may be used to compare the key points between the captured image and the baseline image to identify pairs of corresponding key points based on their descriptors. Coordinates of the key points that correspond may be used for alignment. Using an estimated homography matrix, a new temporary aligned image may be created by warping the captured image to match the baseline image using the corresponding key point coordinates. The temporary aligned image may be used for image thresholding with the baseline image to determine whether a skimmer is present.

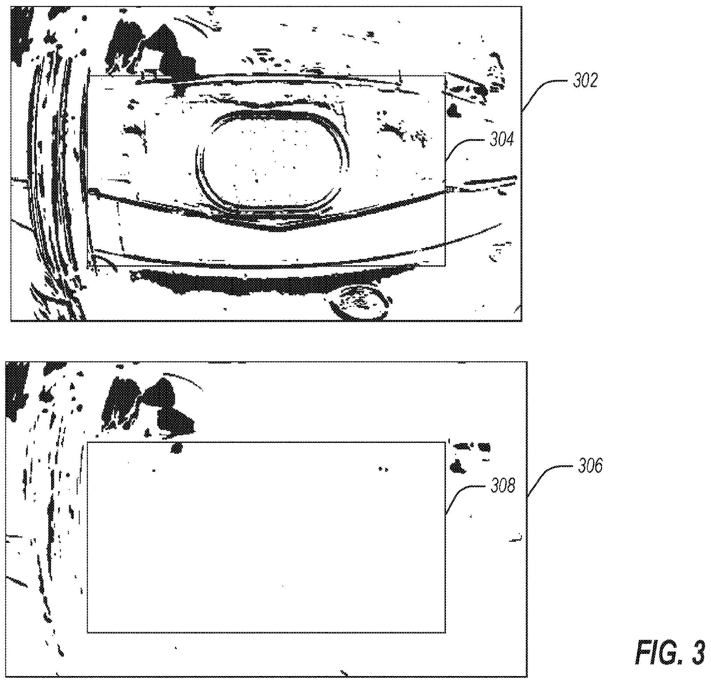

FIG. 3 illustrates a set of comparison images 302 and 306 between a baseline image and a captured image in accordance with some examples. The comparison images 302 and 306 are shown with black illustrating a change between the compared images and white illustrating no change between the compared images, but the opposite color coding may be used in other examples.

Comparison image 302 illustrates a comparison without alignment. The image 302 shows a comparison before an image alignment is applied by comparing a reference image to a captured image. The black pattern (e.g., within a region of interest 304) indicates that the camera has moved. Due to the change within the region of interest 304, an alert may be generated (e.g., a false alert). In response to determining the alert, an attempted alignment may be triggered. In other examples, an alignment may be attempted without first comparing the images.

Comparison image 306 illustrates a comparison after alignment. The image 306 shows a comparison after the image alignment is applied (e.g., the comparison in image 306 is a comparison between a reference image and a temporary aligned image. The black pattern is no longer substantially inside a region of interest 308 and therefore an alert is not raised by this comparison image 306,

In an example, when a change between the reference image and the captured image is identified, a second check may be performed to determine whether the change is image misalignment or a skimmer. The second check includes comparing the reference image to a new temporary aligned image generated using key points to warp the captured image to align with the reference image. When the temporary aligned image to reference image comparison indicates no skimmer is detected (e.g., in image 306), the initial change between the reference image and captured image was a false alert due to camera movement. When the check returns a change between reference image and the temporary aligned image, a skimmer may be present and an alert is raised. In some examples, after identification that the camera has become misaligned, the first check may be skipped and alignment may be attempted automatically (e.g., a comparison between the captured image without alignment and the reference image may be skipped).

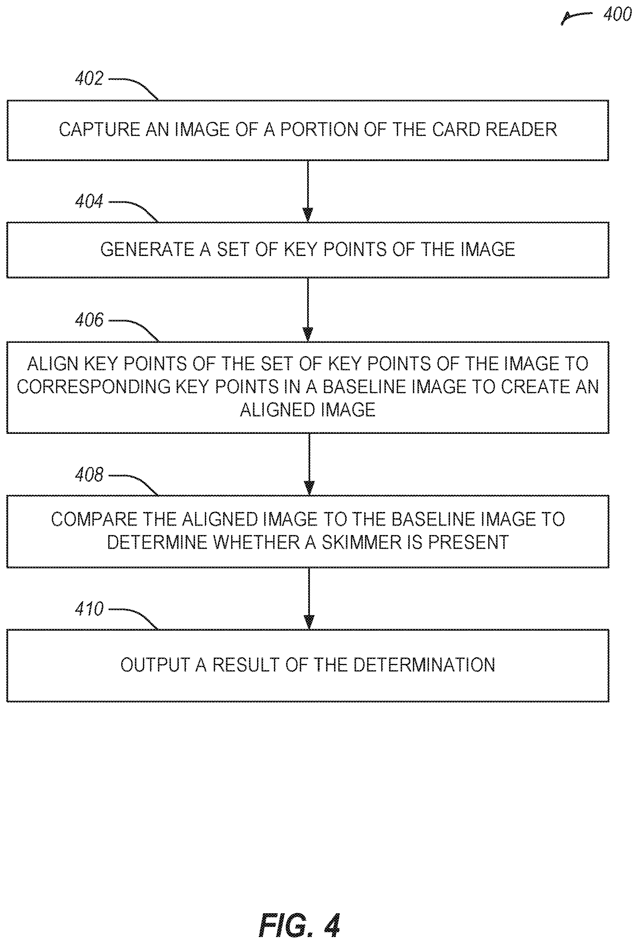

FIG. 4 illustrates generally a flowchart showing a technique 400 for detecting whether a skimmer is present in a card reader of an ATM in accordance with some examples.

The technique 400 includes an operation 402 to capture an image of a portion of the card reader with a camera. Operation 402 may include capturing the image in response to detecting removal of a card from the card reader.

The technique 400 includes an operation 404 to generate a set of key points of the image. In an example, before operation 404, the technique may include comparing the image to a baseline image to determine whether alignment is needed. In this example, determining whether alignment is needed may include identifying that the camera has moved. In this example, determining whether alignment is needed may include determining that the comparison of the image to the baseline image triggers an alert.

The technique 400 includes an operation 406 to align key points of the set of key points of the image to corresponding key points in a baseline image to create an aligned image. The baseline image may be captured by the camera during a process of initial installation of the camera in the ATM.

The technique 400 includes an operation 408 to compare the aligned image to the baseline image to determine whether a skimmer is present. In an example, operation 408 includes comparing a region of interest in the aligned image to a corresponding region of interest in the baseline image. In this example, determining whether the skimmer is present may include determining that the region of interest differs from the corresponding region of interest by greater than a threshold. In this example, determining whether the skimmer is present may include determining that pixel values in the region of interest differ from corresponding pixel values in the corresponding region of interest.

The technique 400 includes an operation 410 to output a result of the determination. The result of the determination may be that there is no skimmer is present. In this example, the result may include saving an indication of the result in a log. When the determination is that there is a skimmer present, operation 410 may include outputting an alert in response to determining that the skimmer is present inside the card reader of the ATM.

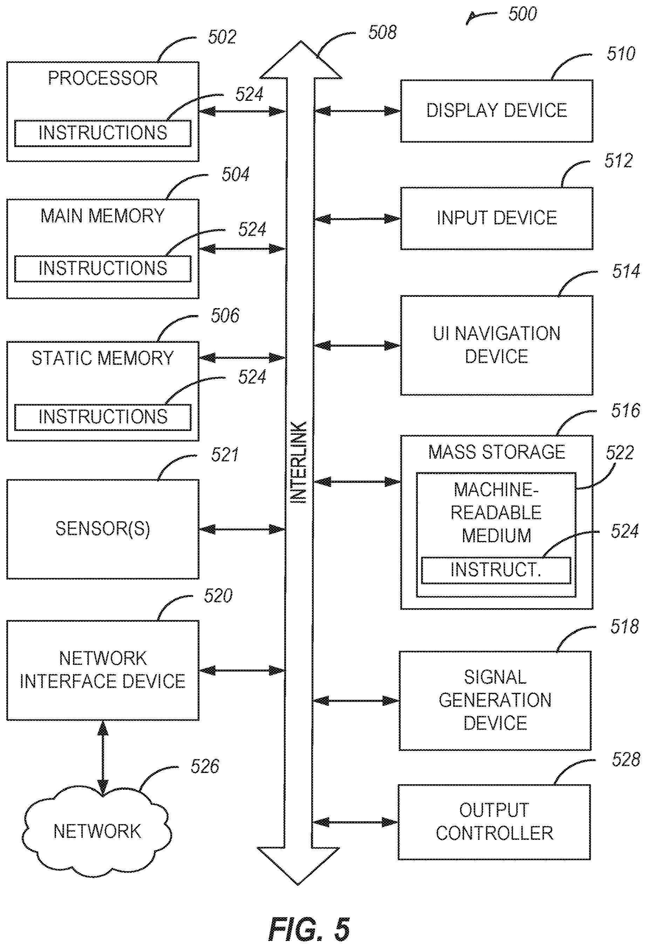

FIG. 5 illustrates generally an example of a block diagram of a machine 500 upon which any one or more of the techniques discussed herein may perform in accordance with some examples. In alternative examples, the machine 500 may operate as a standalone device or may be connected (e.g., networked) to other machines. In a networked deployment, the machine 500 may operate in the capacity of a server machine, a client machine, or both in server-client network environments. In an example, the machine 500 may act as a peer machine in peer-to-peer (P2P) (or other distributed) network environment. The machine 500 may be a personal computer (PC), a tablet PC, a set-top box (STB), a personal digital assistant (PDA), a mobile telephone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

Examples, as described herein, may include, or may operate on, logic or a number of components, modules, or mechanisms. Modules are tangible entities (e.g., hardware) capable of performing specified operations when operating. A module includes hardware. In an example, the hardware may be specifically configured to carry out a specific operation (e.g., hardwired). In an example, the hardware may include configurable execution units (e.g., transistors, circuits, etc.) and a computer readable medium containing instructions, where the instructions configure the execution units to carry out a specific operation when in operation. The configuring may occur under the direction of the executions units or a loading mechanism. Accordingly, the execution units are communicatively coupled to the computer readable medium when the device is operating. In this example, the execution units may be a member of more than one module. For example, under operation, the execution units may be configured by a first set of instructions to implement a first module at one point in time and reconfigured by a second set of instructions to implement a second module.

Machine (e.g., computer system) 500 may include a hardware processor 502 (e.g., a central processing unit (CPU), a graphics processing unit (GPU), a hardware processor core, or any combination thereof), a main memory 504 and a static memory 506, some or all of which may communicate with each other via an interlink (e.g., bus) 508. The machine 500 may further include a display unit 510, an alphanumeric input device 512 (e.g., a keyboard), and a user interface (UI) navigation device 514 (e.g., a mouse). In an example, the display unit 510, alphanumeric input device 512 and UI navigation device 514 may be a touch screen display. The machine 500 may additionally include a storage device (e.g., drive unit) 516, a signal generation device 518 (e.g., a speaker), a network interface device 520, and one or more sensors 521, such as a global positioning system (GPS) sensor, compass, accelerometer, or other sensor. The machine 500 may include an output controller 528, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

The storage device 516 may include a machine readable medium 522 that is non-transitory on which is stored one or more sets of data structures or instructions 524 (e.g., software) embodying or utilized by any one or more of the techniques or functions described herein. The instructions 524 may also reside, completely or at least partially, within the main memory 504, within static memory 506, or within the hardware processor 502 during execution thereof by the machine 500. In an example, one or any combination of the hardware processor 502, the main memory 504, the static memory 506, or the storage device 516 may constitute machine readable media.

While the machine readable medium 522 is illustrated as a single medium, the term "machine readable medium" may include a single medium or multiple media (e.g., a centralized or distributed database, and/or associated caches and servers) configured to store the one or more instructions 524.

The term "machine readable medium" may include any medium that is capable of storing, encoding, or carrying instructions for execution by the machine 500 and that cause the machine 500 to perform any one or more of the techniques of the present disclosure, or that is capable of storing, encoding or carrying data structures used by or associated with such instructions. Non-limiting machine readable medium examples may include solid-state memories, and optical and magnetic media. Specific examples of machine readable media may include: nonvolatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; and CD-ROM and DVD-ROM disks.

The instructions 524 may further be transmitted or received over a communications network 526 using a transmission medium via the network interface device 520 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), or wireless data networks (e.g., Institute of Electrical and Electronics Engineers (IEEE) 802.11 family of standards known as Wi-Fi^{®}, IEEE 802.16 family of standards known as WiMax^{®}), IEEE 802.15.4 family of standards, peer-to-peer (P2P) networks, among others. In an example, the network interface device 520 may include one or more physical jacks (e.g., Ethernet, coaxial, or phone jacks) or one or more antennas to connect to the communications network 526. In an example, the network interface device 520 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding or carrying instructions for execution by the machine 500, and includes digital or analog communications signals or other intangible medium to facilitate communication of such software.

Each of these non-limiting examples may stand on its own, or may be combined in various permutations or combinations with one or more of the other examples.

Example 1 is a method comprising: capturing, using a camera, an image inside a card reader of an automated teller machine (ATM); generating a set of key points of the image; aligning key points of the set of key points of the image to corresponding key points in a baseline image to create an aligned image; comparing the aligned image to the baseline image to determine whether a skimmer is present; and in response to determining that the skimmer is present inside the card reader of the ATM, outputting an alert.

In Example 2, the subject matter of Example 1 includes, wherein comparing the aligned image to the baseline image includes comparing a region of interest in the aligned image to a corresponding region of interest in the baseline image.

In Example 3, the subject matter of Example 2 includes, wherein determining that the skimmer is present includes determining that the region of interest differs from the corresponding region of interest by greater than a threshold.

In Example 4, the subject matter of Examples 2-3 includes, determining that the skimmer is present includes determining that pixel values in the region of interest differ from corresponding pixel values in the corresponding region of interest.

In Example 5, the subject matter of Examples 1-4 includes, before generating the set of key points of the image, comparing the image to the baseline image to determine whether alignment is needed.

In Example 6, the subject matter of Examples 1-5 includes, wherein determining that alignment is needed includes identifying that the camera has moved.

In Example 7, the subject matter of Examples 1-6 includes, wherein determining that alignment is needed includes determining that the comparison of the image to the baseline image triggers the alert.

In Example 8, the subject matter of Examples 1-7 includes, wherein the baseline image is captured by the camera during a process of initial installation of the camera in the ATM.

In Example 9, the subject matter of Examples 1-8 includes, wherein capturing the image includes capturing the image in response to detecting removal of a card from the card reader.

Example 10 is an automated teller machine (ATM) comprising: a card reader; a camera configured to capture an image of a portion of the card reader; processing circuitry; and memory including instructions, which when executed by the processing circuitry, cause the processing circuitry to perform operations including: generating a set of key points of the image; aligning key points of the set of key points of the image to corresponding key points in a baseline image to create an aligned image; comparing the aligned image to the baseline image to determine whether a skimmer is present; and outputting a result of the determination.

In Example 11, the subject matter of Example 10 includes, wherein the result of the determination is that no skimmer is present, and wherein outputting the result includes saving an indication of the result in a log.

In Example 12, the subject matter of Examples 10-11 includes, wherein outputting the result includes outputting an alert in response to determining that the skimmer is present inside the card reader of the ATM.

In Example 13, the subject matter of Examples 10-12 includes, wherein comparing the aligned image to the baseline image includes comparing a region of interest in the aligned image to a corresponding region of interest in the baseline image.

In Example 14, the subject matter of Example 13 includes, wherein determining whether the skimmer is present includes determining that the region of interest differs from the corresponding region of interest by greater than a threshold.

In Example 15, the subject matter of Examples 13-14 includes, determining whether the skimmer is present includes determining that pixel values in the region of interest differ from corresponding pixel values in the corresponding region of interest.

In Example 16, the subject matter of Examples 10-15 includes, before generating the set of key points of the image, comparing the image to the baseline image to determine whether alignment is needed.

In Example 17, the subject matter of Example 16 includes, wherein determining that alignment is needed includes identifying that the camera has moved.

In Example 18, the subject matter of Examples 16-17 includes, wherein determining that alignment is needed includes determining that the comparison of the image to the baseline image triggers an alert.

In Example 19, the subject matter of Examples 10-18 includes, wherein the baseline image is captured by the camera during a process of initial installation of the camera in the ATM.

In Example 20, the subject matter of Examples 10-19 includes, wherein capturing the image includes capturing the image in response to detecting removal of a card from the card reader.

Example 21 is at least one machine-readable medium including instructions that, when executed by processing circuitry, cause the processing circuitry to perform operations to implement of any of Examples 1-20.

Example 22 is an apparatus comprising means to implement of any of Examples 1-20.

Example 23 is a system to implement of any of Examples 1-20.

Example 24 is a method to implement of any of Examples 1-20.

Method examples described herein may be machine or computer-implemented at least in part. Some examples may include a computer-readable medium or machine-readable medium encoded with instructions operable to configure an electronic device to perform methods as described in the above examples. An implementation of such methods may include code, such as microcode, assembly language code, a higher-level language code, or the like. Such code may include computer readable instructions for performing various methods. The code may form portions of computer program products. Further, in an example, the code may be tangibly stored on one or more volatile, non-transitory, or nonvolatile tangible computer-readable media, such as during execution or at other times. Examples of these tangible computer-readable media may include, but are not limited to, hard disks, removable magnetic disks, removable optical disks (e.g., compact disks and digital video disks), magnetic cassettes, memory cards or sticks, random access memories (RAMs), read only memories (ROMs), and the like.

Throughout the description and claims of this specification, the words "comprise" and "contain" and variations of them mean "including but not limited to" and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of the features and/or steps are mutually exclusive. The invention is not restricted to any details of any foregoing embodiments. The invention extends to any novel one, or novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

## Claims

1. A method comprising:
capturing, using a camera, an image inside a card reader of an automated teller machine (ATM);
generating a set of key points of the image;
aligning key points of the set of key points of the image to corresponding key points in a baseline image to create an aligned image;
comparing the aligned image to the baseline image to determine whether a skimmer is present; and
in response to determining that the skimmer is present inside the card reader of the ATM, outputting an alert.

2. The method of claim 1, wherein comparing the aligned image to the baseline image includes comparing a region of interest in the aligned image to a corresponding region of interest in the baseline image.

3. The method of claim 2, wherein determining that the skimmer is present includes determining that the region of interest differs from the corresponding region of interest by greater than a threshold; and/or
wherein determining that the skimmer is present includes determining that pixel values in the region of interest differ from corresponding pixel values in the corresponding region of interest.

4. The method of any preceding claim, further comprising before generating the set of key points of the image, comparing the image to the baseline image to determine whether alignment is needed.

5. The method of any preceding claim, wherein determining that alignment is needed includes identifying that the camera has moved; and/or
wherein determining that alignment is needed includes determining that the comparison of the image to the baseline image triggers the alert.

6. The method of any preceding claim, wherein the baseline image is captured by the camera during a process of initial installation of the camera in the ATM; and/or
wherein capturing the image includes capturing the image in response to detecting removal of a card from the card reader.

7. An automated teller machine (ATM) comprising:
a card reader;
a camera configured to capture an image of a portion of the card reader;
processing circuitry; and
memory including instructions, which when executed by the processing circuitry, cause the processing circuitry to perform operations including:
generating a set of key points of the image;
aligning key points of the set of key points of the image to corresponding key points in a baseline image to create an aligned image;
comparing the aligned image to the baseline image to determine whether a skimmer is present; and
outputting a result of the determination.

8. The ATM of claim 7, wherein the result of the determination is that no skimmer is present, and wherein outputting the result includes saving an indication of the result in a log.

9. The ATM of claim 7, wherein outputting the result includes outputting an alert in response to determining that the skimmer is present inside the card reader of the ATM.

10. The ATM of any one of claims 7 to 9, wherein comparing the aligned image to the baseline image includes comparing a region of interest in the aligned image to a corresponding region of interest in the baseline image.

11. The ATM of claim 10, wherein determining whether the skimmer is present includes determining whether the region of interest differs from the corresponding region of interest by greater than a threshold; and/or
wherein determining whether the skimmer is present includes determining whether pixel values in the region of interest differ from corresponding pixel values in the corresponding region of interest.

12. The ATM of any one of claims 7 to 11, further comprising before generating the set of key points of the image, comparing the image to the baseline image to determine whether alignment is needed.

13. The ATM of claim 12, wherein determining that alignment is needed includes identifying that the camera has moved; and/or
wherein determining that alignment is needed includes determining that the comparison of the image to the baseline image triggers an alert.

14. The ATM of any one of claims 7 to 13, wherein the baseline image is captured by the camera during a process of initial installation of the camera in the ATM.

15. The ATM of any one of claims 7 to 14, wherein capturing the image includes capturing the image in response to detecting removal of a card from the card reader.
